# EUROPEAN PATENT SPECIFICATION

(11) **EP 0 863 944 B1**
(45) Date of publication and mention of the grant of the patent: **28.06.2000**
(21) Application number: 96939321.4
(22) Date of filing: 28.11.1996
(51) Int. Cl.: C08L 71/12

(54) **POLYPHENYLENE OXIDE RESIN COMPOSITIONS**
ZUSAMMENSETZUNGEN AUS POLYPHENYLENETHERN
COMPOSITIONS DE RESINES D'OXYDES DE POLYPHENYLENES

(30) Priority: 29.11.1995 JP 31024995
(43) Date of publication of application: 16.09.1998
(73) Proprietor: Du Pont-Mitsui Polychemicals Co., Ltd., Tokyo 100 (JP)
(72) Inventor: FUKADA, Toru, Chiba-ken 299-01 (JP); YAMAMOTO, Sadaki, Chiba-ken 290 (JP); YAMAMOTO, Yasufumi, Chiba-ken 274 (JP)
(74) Representative: Cresswell, Thomas Anthony
(86) International application number: JP9603488
(87) International publication number: WO9719994

(56) References cited:
- EP-A- 0 308 743
- EP-A- 0 448 749
- EP-A- 0 488 119
- WO-A-89/04346
- US-A- 4 084 515
- US-A- 4 526 927

## Description

### BACKGROUND OF THE INVENTION

### (Field of the Invention)

This invention relates to polyphenylene oxide resin compositions having excellent heat distortion resistance, moldability, impact resistance and resistance to chemicals.

### (Description of the Prior Art)

Polyphenylene oxide resins are resins having excellent heat resistance, hot water resistance, dimensional stability, resistance to chemicals, mechanical properties, electrical properties and the like. However, because of their high melt viscosity, they have a poor moldability, in addition to which their impact resistance is not sufficiently large. Hence, although methods are known for blending in different types of polymeric materials such as polystyrene resins, even if polystyrene resins are blended in the impact resistance cannot be sufficiently improved, moreover, doing this tends to compromise the excellent properties of polyphenylene oxide resins, such as their heat resistance and resistance to chemicals. In addition, methods are known that involve the blending in of polystyrene resins modified with butadiene rubber or EPDM, or styrene-based thermoplastic elastomers. Although these are effective for improving the impact resistance and there is little descrease in the resistance to chemicals, the increase in the melt viscosity is pronounced, as a result of which the moldability and the appearance of the molded articles are greatly compromised. Hence, these cannot be regarded as methods that are widely employable.

A method whereby an ethylene-unsaturated carboxylic acid ester copolymer is additionally blended was proposed in Japanese published unexamined patent application [Kokai] No.58-17,142(1983) in order to improve upon the drawbacks due to the above-described styrene resin blending. It was indicated there that this exhibits excellent effects on enhancing the moldability, impact resistance and resistance to chemicals. However, because this method has the drawback that peeling arises in the molded product when the above-mentioned ethylene copolymer is added to an excessive degree, strict control of the amount of addition is necessary.

### SUMMARY OF THE INVENTION

The inventors therefore conducted intensive studies in order to find additives which have addition effects comparable to or better than those of the above-mentioned copolymers, and which can also be added in a large amount, thereby enabling even further improvement in the moldability, impact resistance, surface appearance and other properties. As a result, it was found that the desired improvement can be achieved by using the ethylene copolymers described below. Hence, the object of the present invention is to provide polyphenylene oxide resin compositions which have various excellent properties, such as heat resistance, moldability, impact resistance, resistance to chemiclas, and surface appearance.

According to the present invention, there is provided a polyphenylene oxide resin composition comprising 90-99.9 parts by weight of polyphenylene oxide resin or a polymer ingredient containing polyphenylene oxide, and 0.1-10 parts by weight of an ethylene-carbon monoxide-(meth)acrylic acid ester copolymer.

By means of the present invention, the moldability and impact resistance are both improved at the same time, polyphenylene oxide resins having excellent physical properties are obtained, and use can be made of these in a broad range of applications as high-performance engineering plastics.

### DETAILED DESCRIPTION OF PREFERRED EMBODIMENTS

The polyphenylene oxide used in the present invention is a polymer obtained by the oxidative polymerization of one or more phenol compounds having the general formula 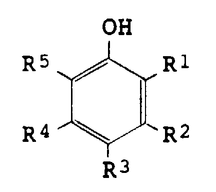 (where R¹, R², R³, R⁴ and R⁵ are selected from hydrogen, halogen atoms, hydrocarbon groups or substituted hydrocarbon groups, with at least one of these being a hydrogen atom) with oxygen or an oxygen-containing gas, and using an oxidative coupling catalyst.

Specific examples that can be cited of R¹, R², R³, R⁴ and R⁵ in the above general formula include hydrogen, chlorine, bromine, fluorine, iodine, methyl, ethyl, n-propyl, iso-propyl, n-butyl, sec-butyl, tert-butyl, chloroethyl, hydroxyethyl, phenylethyl, benzyl, hydroxymethyl, carboxyethyl, methoxycarbonylethyl, cyanoethyl, phenyl, chlorophenyl, methylphenyl, dimethylphenyl, ethylphenyl and allyl.

Specific examples that may be cited of phenol compounds having the above general formula include phenol, o-, m- and p-cresol, 2,6-,2,5-,2,4- and 3,5-dimethylphenol, 2-methyl-6-phenylphenol, 2,6-diphenylphenol, 2,6-diethylphenol, 2-methyl-6-ethylphenol, 2,3,5-, 2,3,6- and 2,4,6-trimethylphenol, 3-methyl-6-t-butylphenol, thymol and 2-methyl-6-allylphenol.

In cases where the polyphenylene oxide resin is produced by the oxidative polymerization of these phenols, this may also consist of copolymerization between a phenol compound having the above general formula and a phenol compound other than those having the above-described general formula, such as a polyhydroxy aromatic compound, examples of which include bisphenol A, tetrabromobisphenol A, resorcinol, hydroquinone, and novolak resins.

Preferable examples that may be cited of the polymer thus obtained, (that is, of the polyphenylene oxide resin), include homopolymers of 2,6-dimethylphenol or 2,6-diphenylphenol, and copolymers of a large amount of 2,6-xylenol and a small amount of 3-methyl-6-t-butylphenol or 2,3,6-trimethylphenol.

The polyphenylene oxide resin may also be obtained by the graft modification of other polymers onto the above-described homopolymer or copolymer. Examples that may be cited include resins obtained by the oxidative polymerization of the above-mentioned phenols in the presence of EPDM, resins obtained by the oxidative polymerization of the above-mentioned phenols in the presence of a polystyrene resin, resins obtained by the graft polymerization of styrene and/or other vinyl monomers using a radical initiator in the presence of a homopolymer or a copolymer of the above-mentioned phenols, and resins obtained by melt-kneading and reacting a homopolymer or a copolymer of the above-mentioned phenols with a polystyrene resin in the presence of a radical generator. Of these, a resin obtained by modification with a polystyrene resin is preferable.

The polyphenylene oxide resin may be a resin obtained by modifying a homopolymer or copolymer of the above-mentioned phenols with a modifying agent such as a polyfunctional compound.

The polyphenylene oxide resin may be used together with other polymer ingredients. Other polymer ingredients such as this that may be cited include polystyrene resins, polyolefins, polyesters, polycarbonates, polyamides, polyacetals, polyvinyl chlorides and synthetic rubbers. Of these, the use of polystyrene resins is especially preferable.

The term "polystyrene resin" here signifies a homopolymer or copolymer of a vinyl aromatic compound. More specific examples that may be cited are resins containing at least 25 wt% of styrene or a derivative thereof, such as α-Methylstyrene or vinyltoluene. Specific examples of these polystyrene resins include, as mentioned above, homopolymers of styrene or derivatives thereof, and styrene polymers modified by the mixture or interaction of natural or synthetic elastomer substances such as polybutadiene, polyisoprene, butyl rubbers, EPDM rubbers, ethylenepropylene copolymers, natural rubbers, polysulfide rubbers, polyurethane rubbers and epichlorohydrin rubbers, and styrene-containing copolymers, examples of which include styrene-based thermoplastic elastomers such as styrene-acrylonitrile copolymers (SAN), styrene-butadiene copolymers, styrene-maleic anhydride copolymers, styrene-acrylonitrile-butadiene polymers (ABS), poly-α-methyl-styrene, styrene-butadienestyrene block copolymers and styrene-isobutylene-styrene block copolymers, or styrene-based thermoplastic elastomers obtained by the hydrogenation of the diene rubber center blocks therein. Resins that are even more preferable for the present invention are polystyrene homopolymer, and rubber-modified polystyrenes obtained by polymerizing styrene in the presence of 3-30 wt%, and preferably 4-12 wt%, of polybutadiene rubber or EPDM rubber.

The above-described EPDM rubber is a rubbery interpolymer composed of a mixture of monoolefins and polyenes; this includes resins produced from ethylene, α-olefins and polyenes. Preferable rubbery interpolymers are those which are composed of 10-90 mol% of ethylene, 10-90 mol% of α-olefins having 3-16 carbons, and 0.1-12 mol% of non-conjugated cyclic or chain-like dienes having 5-20 carbons. Especially preferable types of rubbery interpolymers are those interpolymers composed of ethylene and α-olefins having 3-10 carbons, and especially propylene, non-conjugated cyclic or chain-like dienes having 5-10 carbons, examples of which include 5-ethylidene-2-norbornene, dicyclopentadiene and 1,4-hexadiene.

In cases where a modified resin is used as the polyphenylene oxide resin, or where this is used together with another polymer ingredient, it is preferable for the resin employed to have a composition in which the phenol polymer or copolymer units are used in an amount of at least 15 parts by weight, preferably 15-90 parts by weight, and even more preferably 30-70 parts by weight, and the modifying ingredients or other polymer ingredients are used in an amount of no more than 85 parts by weight, preferably 10-85 parts by weight, and even more preferably 30-70 parts by weight.

In the present invention, 0.1-10 parts by weight, and preferably 0.5-5 parts by weight, of an ethylene-carbon monoxide-(meth)acrylic acid ester copolymer is blended in per 90-99.9 parts by weight of this type of polyphenylene oxide resin or, when polyphenylene oxide is used as a modified resin or is used together with other polymer ingredients, per 90-99.9 parts by weight of the combined amount of polyphenylene oxide and the other polymers. The reference here to "(meth)acrylic acid ester" means an acrylic acid ester or a methacrylic acid ester. When the above-mentioned ethylene copolymer is blended in a small amount, the addition effects are inadequate, on the other hand, when the amount blended in is too large, the decrease in the mechanical properties of the molded product, and especially the rigidity, becomes too great, in addition to which layer-like peeling at the surface of the molded product readily occurs, which is undesirable.

The carbon monoxide polymerization units in this copolymer are included in a ratio of 1-30 wt% and preferably 2-20 wt%, and the (meth)acrylic acid ester polymerization units are included in a ratio of 3-50 wt%, and preferably 10-40 wt%. When a copolymer that does not contain carbon monoxide, such as an ethylene-(meth)acrylic acid ester copolymer, is used as the modifier for the polyphenylene oxide resin and is blended in a large amount, the physical properties such as the impact resistance instead decrease, and the desired improvements in the properties are not achieved.

The (meth)acrylic acid esters may be, for example, the approximately 1- to 10-carbon alkyl esters of acrlylic acid or methacrylic acid. Specific examples of these include methyl acrylate, ethyl acrylate, isopropyle acrylate, isobutyl acrylate, n-butyl acrylate, 2-ethylhexyl acrylate, methyl methacrylate, isobutyl methacrylate and n-butyl methacrylate. Of these, the use of 1- to 4-carbon alkyl esters of acrylic acid or methacrylic acid is preferable.

It is preferable to use as this copolymer one that has a melt flow rate, at 190°C and under a load of 2160 g, of 0.1-400 g/10 minutes, and preferably 1-100 g/10 minutes. In cases where a copolymer having a melt flow rate of less than 0.1 g/10 minutes is used, the dispersion with polyphenylene oxide resin becomes inadequate and it becomes difficult to fully elicit the blending effects. On the other hand, when the melt flow rate becomes too large, there are cases in which the mechanical strength of the resin composition is compromised, which is undesirable.

By blending in flame retardants in order to confer non-flammability or self-extinguish-ability to the compositions of this invention, flame-retarded thermoplastic resin compositions can be obtained. Halogenated organic compounds, mixtures of halogenated organic compounds and antimony compounds, elementary phosphorus, phosphorus compounds, compounds containing phosphorus-nitrogen bonds, or mixtures of these can be used as these flame retardants.

Those resin additives that are commonly employed, in accordance with the use, in the polyphenylene oxide resin compositions of the present invention, can be suitably included. Examples that may be cited of these include plasticizers, stabilizers, antioxidants, pigments, dyes, drip retardants, treatment adjuvants, inorganic mineral fillers, and fibrous, particulate, flake-like or ground glass.

The resin compositions of this invention can easily be prepared by a method that is itself known to the art, such as a method involving the melting or solution mixture of the thermoplastic resins. Suitable examples that may be employed include methods whereby these are fed to an extruder as pellets only, as pellets and powders, or as powders only, and are kneaded and extruded, methods whereby kneading and intimate mixture are carried out using a kneader or rollers, and the blend is extruded in the form of a sheet, and methods whereby these are mixed as solutions.

### EXAMPLES

The present invention shall now be illustrated more concretely by means of examples.

The starting resins used in the application examples and the comparative examples were as follows.
(1) Modified Polyphenylene Oxide Resin;
N50-4125 (manufactured by GE Plastics Japan)
(2) Ethylene-Carbon Monoxide-(Meth)acrylic Acid Ester Copolymers;
(n-butyl acrylate was used as the(meth)acrylic acid ester in each case)
(2-1) Ethylene-Carbon Monoxide-(Meth)acrylic Acid Ester Copolymer 1;

| | |
|---|---|
| n-butyl acrylate content | 30 wt% |
| carbon monoxide content | 10 wt% |
| melt flow rate (190°C, 2160g) | 25 g/10 minutes |

(2-2) Ethylene-Carbon Monoxide-(Meth)acrylic Acid Ester Copolymer 2;

| | |
|---|---|
| n-butyl acrylate content | 30 wt% |
| carbon monoxide content | 13 wt% |
| melt flow rate (190°C, 2160g) | 12 g/10 minutes |

(3) Ethylene-Ethyl Acrylate Copolymer;

| | |
|---|---|
| ethyl acrylate content | 25 wt% |
| melt flow rate (190°C, 2160g) | 20 g/10 minutes |

### (Example 1-6)

The modified polyphenylene oxide resin and the ethylene-carbon monoxide-n-butyl acrylate copolymer were blended in the ratios shown in Table 1, and melt-kneaded at 300°C using a twin-screw extruder having a screw diameter of 30 mm (L/D = 25; with both screws turning in the same direction).

The various physical properties were measured using pellets of the compositions thus obtained, or test pieces fabricated by injection-molding these compositions. The molding and measurement of the test pieces for evaluating the physical properties were carried out under the conditions and method described below.
(1) Molding of Test Pieces for Evaluating the Physical Properties:
   The composition pellets obtained by melt kneading were injection-molded by means of an injection-molding machine at a cylinder temperature of 290°C and a mold temperature of 70-75°C, thereby fabricating test pieces for measuring the heat distortion temperatures, Izod impact strength and tensile strength.
(2) Heat Distortion Temperature:
   Using injected-molded test pieces having a thickness of 6.4 mm, measurement was carried out under a load of 18.6 kg and in general accordance with JIS K7207.
(3) Izod Impact Strength:
   A V-notch was made in melt-molded test pieces having a thickness of 3.2 mm, and the Izod impact strength was measured in general accordance with ASTM D256.
(4) Tensile Strength
   Measurement was carried out in general accordance with JIS K7113 on test pieces having the No. 1 test piece shape indicated in JIS K7113 and a thickness of 3 mm.
(5) Melt Viscosity
   This was measured by means of a capillograph made by Toyo Seiki Seisakusho, using pellets of the composition obtained by kneading in the extruder. (The apparent melt viscosity at a measurement temperature of 280°C and a shear rate of 1385 sec⁻¹ was measured.)
(6) Layer-Like Peeling of the Molded Articles:
   Square plates having a thickness of 2 mm were obtained by injection molding, the square plate was bent several times, and the peeling state in the bent portion was observed. This was evaluated according to the following criteria.
   ○: no peeling
   Δ: some peeling
   X : severe peeling

### (Comparative Example 1)

The physical properties were evaluated in the same manner as in Application Examples 1-6 for modified polyphenylene oxide resin by itself. The results are given in Table 1.

### (Comparative Examples 2-3)

Using an ethylene-ethyl acrylate copolymer in place of the ethylene-carbon monoxide-n-butyl acrylate copolymer in the present invention, this was blended with a modified polyphenylene oxide resin in the mixing ratios indicated in Table 1, melt-kneaded using an extruder by the same method as in the application examples, and the physical properties of the compositions were measured. The results are presented in Table 1.

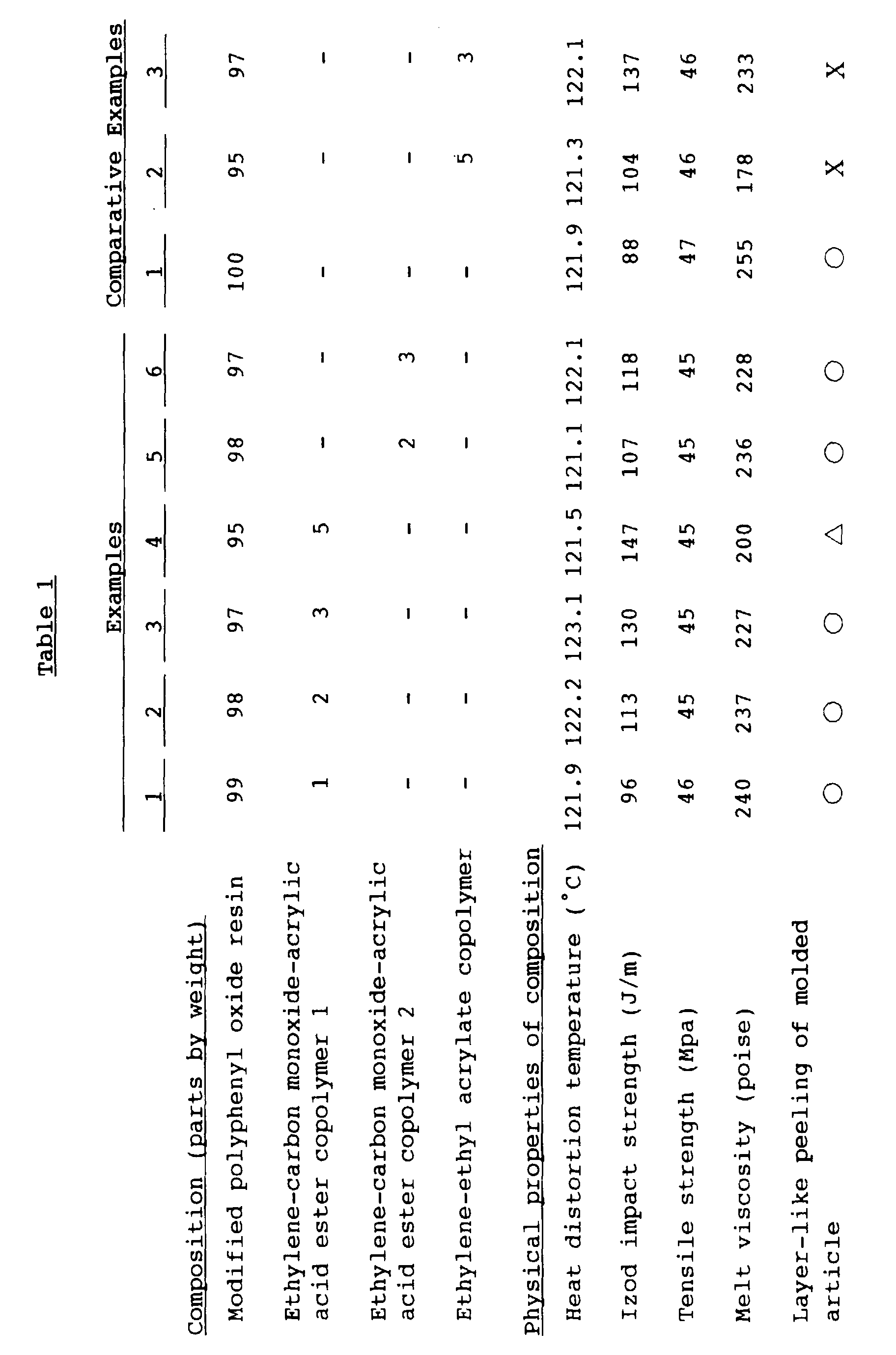

As is apparent from Table 1, by means of the present invention, the melt viscosity of a modified polyphenylene oxide resin can be lowered without lowering the heat distortion temperature of the same resin, thereby enhancing the moldability, and also giving a composition having an enhanced impact resistance.

Moreover, as is also apparent from a comparison with Comparative Examples 2-3, even though the compositions of the present invention blend in a larger amount of ethylene copolymer as a modifier than compositions obtained by the formulation of ethylene-unsaturated carboxylic acid ester copolymers, given that a decreasing trend in the Izod impact strength is not apparent, large amount of ethylene copolymer can be formulated. This is also excellent with respect to the peeling effect in the molded articles.

## Claims

1. A polyphenylene oxide resin composition comprising 90 - 99.9 parts by weight of polyphenylene oxide resin or a polymer component containing polyphenylene oxide, and 0.1 - 10 parts by weight of an ethylene-carbon monoxide-(meth)acrylic acid ester copolymer.

2. A polyphenylene oxide resin composition according to Claim 1, whereby the polymer component containing polyphenylene oxide resin is a polyphenylene oxide resin modified with polystyrene resin or a mixture of polyphenylene oxide resin and polystyrene resin.

3. A polyphenylene oxide resin composition according to Claim 1 or 2, whereby the ethylene-carbon monoxide-(meth)acrylic acid ester copolymer is a copolymer having a carbon monoxide content of 1 - 30 wt% and a (meth)acrylic acid ester content of 3 - 50 wt%.

## Patentansprüche

1. Polyphenylenoxidharz-Zusammensetzung, umfassend 90 bis 99,9 Gewichtsteile Polyphenylenoxidharz oder eine polymere Komponente, die Polyphenylenoxid enthält, und 0,1 bis 10 Gewichtsteile eines Ethylen/Kohlenmonoxid/(Meth)acrylsäureester-Copolymers.

2. Polyphenylenoxidharz-Zusammensetzung nach Anspruch 1, dadurch gekennzeichnet, daß die Polyphenylenoxidharz enthaltende polymere Komponente ein mit Polystyrolharz oder eine Mischung aus Polyphenylenoxidharz und Polystyrolharz modifiziertes Polyphenylenoxidharz ist.

3. Polyphenylenoxidharz-Zusammensetzung nach Anspruch 1 oder 2, dadurch gekennzeichnet, daß das Ethylen/Kohlenmonooxid/(Meth)acrylsäureester-Copolymer ein Copolymer mit einem Kohlenmonoxidgehalt von 1 bis 30 Gew.-% und einem (Meth)acrylsäureestergehalt von 3 bis 50 Gew.-% ist.

## Revendications

1. Composition de résine d'oxyde de polyphénylène comprenant 90-99,9 parties en poids d'une résine d'oxyde de polyphénylène ou d'un composant polymère contenant de l'oxyde de polyphénylène, et 0,1-10 parties en poids d'un copolymère éthylène-monoxyde de carbone-ester d'acide (méth)acrylique.

2. Composition de résine d'oxyde de polyphénylène selon la revendication 1, dans laquelle le composant polymère contenant de l'oxyde de polyphénylène est une résine d'oxyde de polyphénylène modifiée avec une résine de polystyrène ou un mélange d'une résine d'oxyde de polyphénylène et d'une résine de polystyrène.

3. Composition de résine d'oxyde de polyphénylène selon la revendication 1 ou la revendication 2, dans laquelle le copolymère éthylène-monoxyde de carbone-ester d'acide (méth)acrylique est un copolymère ayant une teneur en monoxyde de carbone de 1-30 % en poids et une teneur en ester d'acide (méth)acrylique de 3-50 % en poids.
